# EUROPÄISCHE PATENTANMELDUNG

(11) **EP 4 837 757 A1**
(43) Veröffentlichungstag der Anmeldung: **11.11.2026**
(21) Anmeldenummer: 26176484.9
(22) Anmeldetag: 05.05.2026
(51) Int. Cl.: B60G 17/0165, B60G 17/06, B60G 17/019, B60G 17/0185, G01M 17/04

(54) **VERFAHREN UND VORRICHTUNG ZUM ÜBERPRÜFEN VON STOSSDÄMPFERN**

(30) Priorität: 05.05.2025 DE 102025117087
(71) Anmelder: Herrmann AG, 93483 Pösing (DE)
(72) Erfinder: HERRMANN, Johannes, 93483 Pösing (DE)
(74) Vertreter: Hannke Bittner & Partner mbB Regensburg

(57) **Zusammenfassung**

Verfahren zum Untersuchen des Dämpfungsverhaltens von Stoßdämpfern von Kraftfahrzeugen und insbesondere von Straßenkraftfahrzeugen (1), wobei eine Fahrbahn (2) mit einer aus der Fahrbahnebene herausragenden Erhebung (22) zur Verfügung gestellt wird, und diese Erhebung von dem Kraftfahrzeug mit mindestens einem Reifen (6a, 6b, 6c, 6d) überfahren wird und während dieses Überfahrens ein Dämpfungsverhalten wenigstens desjenigen Stoßdämpfers ermittelt wird, der diesem Reifen (6a, 6b, 6c, 6d) zugeordnet ist, dadurch gekennzeichnet, dass zur Ermittlung des Dämpfungsverhaltens eine Sensoreinrichtung (4a, 4b, 4c, 4d) verwendet wird, welche eine für eine Bewegung des Reifens gegenüber der Sensoreinrichtung (4a, 4b, 4c, 4d) charakteristische Größe ist.

## Beschreibung

Die vorliegende Erfindung bezieht sich auf ein Verfahren und eine Vorrichtung zum Überprüfen von Stoßdämpfern, insbesondere von Kraftfahrzeugen und insbesondere von PKWs. Aus dem Stand der Technik sind unterschiedliche Vorrichtungen und Verfahren zum Untersuchen von Stoßdämpfern bekannt. Diese sind jedoch teilweise entweder zu ungenau oder nicht in der Lage, die komplexen Anforderungen moderner Fahrzeuge zu erfüllen.

Insbesondere bei bereits gealterten Fahrwerksdämpfersystemen ergeben sich Schwierigkeiten in der Datenerfassung. Auch ist es im Stand der Technik schwierig, eine dynamische Erfassung und Bewertung eines Dämpfungsverhaltens in verschiedenen Phasen wie der Kompression oder der Rückstellung zu erhalten sowie die entsprechenden Daten zu analysieren.

Der vorliegenden Erfindung liegt daher die Aufgabe zugrunde, ein Verfahren und eine Vorrichtung zur Bestimmung der Dämpfung und insbesondere der Restdämpfung in auch gealterten Dämpfersystemen zur Verfügung zu stellen. Dabei sollen auch eine höhere Präzisionseffizienz und Benutzerfreundlichkeit erreicht werden.

Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Untersuchung eines Dämpfungsverhaltens von Stoßdämpfern von Kraftfahrzeugen und insbesondere von Straßenkraftfahrzeugen wird eine Fahrbahn mit einer aus der Fahrbahnebene herausragenden Erhebung zur Verfügung gestellt und diese Erhebung wird von einen Kraftfahrzeug mit mindestens einem Reifen (insbesondere mit einer definierten Geschwindigkeit) überfahren und es wird während dieses Überfahrens ein Dämpfungsverhalten wenigstens desjenigen Stoßdämpfers ermittelt, der diesen Reifen zugeordnet ist.

Erfindungsgemäß wird zur Ermittlung des Dämpfungsverhaltens eine Sensoreinrichtung verwendet, welche eine für eine Bewegung des Reifens (bzw. des entsprechenden Rades des Kraftfahrzeugs) gegenüber der Sensoreinrichtung (bzw. der Sensoreinrichtung gegenüber dem Reifen oder Rad oder gegenüber der Fahrbahn) und/oder eine für eine Bewegung der Sensoreinrichtung gegenüber der Fahrbahn charakteristische Größe bestimmt.

Während im Stand der Technik teilweise Kräfte bestimmt werden, wird im Rahmen der Erfindung vorgeschlagen, dass unmittelbar eine Bewegungsgröße bestimmt wird und aus dieser Bewegungsgröße wiederum Daten über das Verhalten der Stoßdämpfer abgeleitet werden.

Bevorzugt wird das Kraftfahrzeug mit einer definierten Geschwindigkeit über die Erhebung gefahren. Auf diese Weise kann - insbesondere mit Referenzwerten - auf den Zustand des jeweiligen Stoßdämpfers geschlossen werden.

Es ist dabei möglich, dass ein Überfahren der Erhebung mit mehreren insbesondere definierten Geschwindigkeiten erfolgt und dabei jeweils das Verhalten der Stoßdämpfer bestimmt wird. Es kann dabei auch ein Vergleich mit Referenzdaten durchgeführt werden, die ebenfalls bei definierten Geschwindigkeiten aufgenommen wurden.

Die Anmelderin hat herausgefunden, dass durch diese unmittelbare Messung der Bewegungsgröße in sehr präziser Weise ein Verhalten von Stoßdämpfern und besondere auch von älteren Stoßdämpfern ermittelt werden kann. Besonders bevorzugt wird jedoch eine definierte und insbesondere genau festgelegte Geschwindigkeit verwendet. Die Geschwindigkeit wirkt sich auf diese Bewegungsgröße ebenfalls unmittelbar aus. Bevorzugt werden Einzelmessungen dieses Messwerts oder unten genauer erläutert diese Messwertverläufe abgespeichert.

Bevorzugt ist die Geschwindigkeit, mit der das Fahrzeug über die Erhebung fährt, größer als 2 km/h, bevorzugt größer als 3 km/h, bevorzugt größer als 5 km/h und bevorzugt größer als 7 km/h.

Bevorzugt ist die besagte Geschwindigkeit, mit der das Fahrzeug über die Erhebung fährt, geringer als 50 km/h bevorzugt geringer als 40 km/h, bevorzugt geringer als 30 km/h, bevorzugt geringer als 25 km/h, bevorzugt geringer als 20 km/h und bevorzugt geringer als 15 km/h.

Bei einer weiteren bevorzugten Ausführungsform weist die Erhebung eine definierte Gestalt auf. So kann diese beispielsweise kreissegmentförmig ausgebildet sein, sie könnte jedoch auch einen elliptischen Verlauf haben. Auch die maximale Höhe und Breite der Erhebung ist entsprechend genau definiert.

Bei einer gedachten starren Verbindung zwischen dem Reifen und der Sensoreinrichtung (und unter Außerachtlassung der Elastizität des Reifens) würde die Bewegung der Sensoreinrichtung genau der Struktur bzw. Gestalt der Erhebung folgen.

Besonders bevorzugt wird zur Ermittlung des Dämpfungsverhaltens auch der Fahrzeugtyp des Fahrzeugs mitberücksichtigt oder auch das Fahrzeuggewicht, eine Beladung, ein Motorgewicht, eine Art der Reifen, ein Luftdruck des Reifens und dergleichen. Daneben kann auch eine Dämpfereinstellung beispielsweise eine eingestellte Dämpferhärte berücksichtigt werden. Diese jeweiligen Daten können ebenfalls einen erheblichen Einfluss auf die Messung des Dämpfungsverhaltens haben. Es können darüber hinaus auch weitere physikalische Eigenschaften des Kraftfahrzeugs berücksichtigt werden.

Bevorzugt werden die Messungen bei einem definierten Luftdruck des oder der Reifen durchgeführt.

Bei einem bevorzugten Verfahren handelt es sich bei der Bewegung des Reifens gegenüber der Sensoreinrichtung um eine Bewegung in einer vertikalen Richtung und/oder in einer senkrecht zu der Fahrbahn stehenden Richtung. Bevorzugt werden dabei weitere Komponenten dieser Bewegung (insbesondere die Komponente in der Fahrtrichtung) oder Beschleunigung außer Acht gelassen und die Betrachtung lediglich auf die vertikale Bewegung reduziert. Auf diese Weise kann in besonders einfacher Weise das Dämpfungsverhalten des Stoßdämpfers, welches ebenfalls in der vertikalen Richtung betrachtet wird, ermittelt werden.

Bei einem bevorzugten Verfahren wird die Sensoreinrichtung an einem von dem Reifen und/oder Rad verschiedenen Bereich des Fahrzeugs und insbesondere an einer Karosserie des Kraftfahrzeugs angeordnet. Bevorzugt ist dieser Bereich des Kraftfahrzeugs mit dem Reifen über den zu untersuchenden Stoßdämpfer mechanisch gekoppelt.

Bei einem weiteren bevorzugten Verfahren wird die Sensoreinrichtung im Wesentlichen oberhalb des Reifens bzw. oberhalb der Rotationsachse des Reifens angeordnet und insbesondere befestigt.

Besonders bevorzugt weist die Sensoreinrichtung eine Sensoreinheit auf, welche sich unabhängig von einer Montageposition und/oder Montagestellung der Sensoreinrichtung derart ausrichtet, dass eine Messung der Bewegung in der vertikalen Richtung durchgeführt wird.

So können beispielsweise mechanische Elemente vorgesehen sein, welche sich automatisch in der vertikalen Achse bzw. in Richtung des Erdmittelpunkts ausrichten. Es wäre jedoch auch möglich, dass elektronisch und/oder softwareseitig die tatsächliche Ausrichtung der Sensoreinrichtung erfasst wird und diese tatsächliche Ausrichtung derart transformiert wird, dass eine Umrechnung in die vertikale Ausrichtung erfolgen kann. Auf diese Weise kann sichergestellt werden, dass tatsächlich nur die gewünschte Bewegungsgröße in einer Richtung, die auf den Erdmittelpunkt zuläuft, bestimmt wird.

Bei einem weiteren bevorzugten Verfahren ist die für die Bewegung des Reifens gegenüber der Sensoreinrichtung charakteristische Größe aus einer Gruppe von Größen ausgewählt, welche eine geometrische Position der Sensoreinrichtung bzw. eine Änderung der Position gegenüber dem Reifen (bzw. Rad) und/oder der Fahrbahn, insbesondere eine geometrische Position der Sensoreinrichtung gegenüber dem Reifen bzw. Rad und/oder gegenüber der Fahrbahn in einer vertikalen Richtung, eine Geschwindigkeit einer Bewegung der Sensoreinrichtung gegenüber dem Reifen bzw. Rad und/oder der Fahrbahn, insbesondere eine Geschwindigkeit der Bewegung der Sensoreinrichtung gegenüber dem Reifen bzw. Rad und/oder der Fahrbahn in einer vertikalen Richtung, eine Beschleunigung einer Bewegung der Sensoreinrichtung gegenüber dem Reifen bzw. Rad und/oder der Fahrbahn insbesondere eine Beschleunigung der Bewegung der Sensoreinrichtung gegenüber dem Reifen bzw. Rad und/oder der Fahrbahn in einer vertikalen Richtung und einen Ruck einer Bewegung der Sensoreinrichtung gegenüber dem Reifen bzw. Rad und/oder der Fahrbahn, insbesondere einen Ruck, der Bewegung der Sensoreinrichtung gegenüber dem Reifen bzw. Rad und/oder der Fahrbahn in einer vertikalen Richtung enthält.

Bei einem bevorzugten Verfahren handelt es sich bei der charakteristischen Größe um eine Position der Sensoreinrichtung gegenüber der Fahrbahn bzw. um einen Abstand der Sensoreinrichtung (oder eine Änderung derselben) von der Fahrbahn in der vertikalen Richtung oder um eine vertikale Position der Sensoreinrichtung bzw. eine Änderung deren Position.

Bevorzugt wird bei diesen Ausgestaltungen die Eigendrehung des Reifens nicht berücksichtigt. So kann beispielsweise ein definierter Punkt des Reifens verwendet werden, wie etwa der Bereich einer geometrischen Rotationsachse des Reifens. Durch die Anordnung der Sensoreinrichtung an einen Bereich des Kraftfahrzeugs, der nicht an einem Reifen oder Rad selbst angeordnet ist und insbesondere auch nicht an der Dämpfereinrichtung kann aus der Relativbewegung der Sensoreinrichtung das Bewegungsverhalten des Reifens erfasst werden.

Es ist dabei keine weitere Sensoreinrichtung an dem Reifen oder Rad nötig. Jedoch kann davon ausgegangen werden, dass sich aus der Bewegung der Sensoreinrichtung in der vertikalen Richtung direkt auch das Dämpfungsverhalten des Stoßdämpfers ergibt, denn der Reifen steht in dieser vertikalen Richtung über die Stoßdämpfereinrichtung beispielsweise mit der Karosserie des Kraftfahrzeugs zumindest mittelbar in Verbindung.

Dies bedeutet, dass sich beispielsweise bei dem Überfahren einer Erhebung durch das Kraftfahrzeug beispielsweise dessen Karosserie in der vertikalen Richtung bewegen wird.

Dabei wird ein Teil dieser Bewegung, welche durch die Erhebung verursacht wird, gerade von der Dämpfungseinrichtung aufgefangen. Aus der verbleibenden und zu messenden Relativbewegung der Sensoreinrichtung kann jedoch wie unten genauer erläutert wird, insbesondere durch Vergleich mit Referenzwerten auf das Dämpfungsverhalten geschlossen werden.

Bei einem bevorzugten Verfahren ist die charakteristische Größe ein Verlauf (dieser Bewegungsgröße), der über eine vorgegebene Zeit und/oder über eine vorgegebene Bewegungstrecke aufgenommen wird. Besonders bevorzugt wird hierbei die Bewegungsgröße während des gesamten Überfahrens der Erhebung aufgenommen.

Bei einem weiteren bevorzugten Verfahren wird die charakteristische Größe mit einem Referenzwert verglichen und aus diesem Vergleich wird wenigstens ein Wert ermittelt, der für einen Qualitätszustand des Stoßdämpfers charakteristisch ist. Bevorzugt wird ein Verlauf der Bewegungsgröße mit einem Referenzverlauf verglichen und bevorzugt wird aus diesem Vergleich ein Wert ermittelt, der für den Qualitätszustand des Stoßdämpfers charakteristisch ist.

Es wäre auch möglich, eine entsprechende Sensoreinrichtung an dem Reifen selbst anzuordnen und beispielsweise den Abstand zu einem Referenzpunkt an der Fahrzeugkarosserie zu messen. Eine derartige Messung ist jedoch erheblich aufwendiger, da bei der Beschleunigungsermittlung auch die Bewegung des Reifens, nämlich dessen Drehbewegung berücksichtigt werden müsste.

Der Ansatz der Anmelderin besteht also darin, die Sensoreinrichtung bevorzugt an einem stationären Element des Fahrzeugs, d. h. einem Element, welches sich insbesondere nur mit der Fahrtgeschwindigkeit in der Fahrtrichtung bewegt, anzuordnen. Aus dieser Bewegung in der vertikalen Richtung kann wie oben erwähnt auf die Qualität der zugeordneten Dämpfereinrichtung reagiert werden bzw. diese bestimmt werden.

Bevorzugt ist eine Vielzahl von Referenzkurven in einer Datenbank abgespeichert. Es ist möglich, dass für eine große Vielzahl an Kraftfahrzeugen derartige der Referenzkurven bzw. Referenzverläufe beispielsweise in einem Neuzustand aufgenommen werden oder auch in einem vorgegebenen Alterszustand. Durch einen Vergleich einer aufgenommenen Kurve mit derartigen Referenzkurven kann auf den Zustand des oder der Stoßdämpfer geschlossen werden.

Besonders bevorzugt wird zur Ermittlung des Qualitätszustands der Stoßdämpfer eine künstliche Intelligenz (KI) eingesetzt.

Bei einem weiter bevorzugten Verfahren erfolgt ein Ermitteln und/oder Auswerten des Bewegungsverlaufs in Abhängigkeit eines, insbesondere trainierbaren, Bewegungsverlaufs-Modells maschinellen Lernens, welches einen Satz insbesondere trainierbarer, Parameter umfasst, welche auf Werte eingestellt sind, die als Ergebnis eines Trainingsprozesses gelernt wurden, wobei der Trainingsprozess auf Grundlage eines Satzes von Trainingsdaten erfolgt ist.

Bevorzugt umfassen die Trainingsdaten wenigstens eine für einen Bewegungsverlauf der Sensoreinrichtung charakteristisch Bewegungsgröße, insbesondere eine Vertikalposition der Sensoreinrichtung bzw. eines Verlaufs dieser Vertikalposition, eine Beschleunigung der Veränderung der Position der Sensoreinrichtung in der vertikalen Richtung oder eine Geschwindigkeit der Veränderung der Position der Sensoreinrichtung in der vertikalen Richtung.

Bevorzugt basiert das Bewegungsverlaufs -Modell maschinellen Lernens auf einem (künstlichen) neuronalen Netzwerk. Bevorzugt ist das neuronale Netzwerk als tiefes neuronales Netzwerk (Deep Neural Network, DNN), bei dem die parametrierbare Verarbeitungskette eine Mehrzahl von Verarbeitungsschichten aufweist, und/oder ein sogenanntes Convolutional Neural Network (CNN) (dt. Faltungsnetzwerk) und/oder ein rekurrentes Neuronales Netzwerk (RNN, engl. Recurrent Neural Network) ausgebildet.

Bevorzugt werden dem Bewegungsverlaufs -Modell bzw. dem (künstlichen) neuronalen Netzwerk die (zu verarbeitenden) Daten, insbesondere Gewichte des untersuchten Kraftfahrzeugs, Typ des untersuchten Kraftfahrzeugs, Größe des untersuchten Kraftfahrzeugs, Geschwindigkeit des untersuchten Kraftfahrzeugs, Form und Gestalt der Erhebung, Alter des Kraftfahrzeugs, Radstände des Kraftfahrzeugs und dergleichen (oder hiervon abgeleitete Daten) als Eingangsgrößen zugeführt

Diese Werte können beispielsweise manuell eingegeben werden oder beispielsweise durch Auslesen eines Nummernschildes des Kraftfahrzeugs automatisch ermittelt werden (insbesondere unter Zuhilfenahme einer Datenbank.

Bevorzugt bildet das Bewegungsverlaufs -Modell bzw. das künstliche neuronale Netzwerk die Eingangsgrößen in Abhängigkeit einer parametrierbaren Verarbeitungskette auf Ausgangsgrößen ab.

Bevorzugt ist als Ausgangsgröße wenigstens eine für einen Qualitätszustand der jeweiligen Dämpfereinrichtung charakteristische Größe gewählt, beispielsweise ein Wert, der angibt, ob die betreffende Dämpfereinrichtung noch vollständig intakt ist, bereits Schäden aufweist oder derart mangelhaft ist, dass sie ausgewechselt werden sollte.

Bevorzugt wird/wurde das Bewegungsverlaufs -Modells maschinellen Lernens unter Verwendung vorgegebener Trainingsdaten trainiert, wobei durch das Training die parametrierbare Verarbeitungskette parametriert wird.

Bei einem bevorzugten Verfahren werden in dem Trainingsprozess des Bewegungsverlaufs - Modells Trainingsdaten verwendet, welche von der oder einer Sensoreinrichtung und/oder im Rahmen von erfindungsgemäßen Verfahren zum Überprüfen von Stoßdämpfern beispielsweise an typgleichen oder anderen Kraftfahrzeugen aufgenommene Daten umfassen.

Denkbar ist auch, dass Trainingsdaten auf Grundlage von verschiedenen (bevorzugt baugleichen) Kraftfahrzeugen verwendet werden. Dies bietet den Vorteil, dass in kurzer Zeit eine hohe Zahl an Trainingsdaten erzeugt und etwaige Fehlfunktionen der Stoßdämpfer entdeckt werden können.

Bevorzugt werden die zur Verwendung als Trainingsdaten vorgesehenen ermittelten Sensordaten und/oder Referenzdaten mit (Kraftfahrzeug-)Sortenmerkmalen (etwa Gewicht und Hersteller) und/oder Klassifikationsmerkmalen (etwa eine vorgegebene Soll-Bewegungsgröße), die anzeigt ob die jeweilige Bewegungsgröße, insbesondere in Abhängigkeit von der Kraftfahrzeugart oder Kraftfahrzeugeigenschaften für eine Erfüllung der Dämpfungsfunktion ausreicht) versehen.

Bevorzugt werden die ermittelten Bewegungsgrößen zusammen mit den jeweils ihnen zugeordneten Kraftfahrzeugsorten und/oder Kraftfahrzeugeigenschaften und/oder Klassifikationsmerkmalen als Trainingsdatensatz (insbesondere auf einer und/oder der nicht-flüchtigen Speichereinrichtung) abgelegt und/oder verwendet. Bevorzugt wird auf diese Weise eine Vielzahl von Trainings-Datensätzen erzeugt.

Durch die Variation von Vorgaben, beispielsweise einer Geschwindigkeit des KFZ beim Überfahren der Erhebung oder durch eine Variation der Erhebung selbst ist es theoretisch möglich eine Korrelation zwischen der Geschwindigkeit und/oder und der Bewegungsgröße zu ermitteln.

Bevorzugt wird ein derart trainiertes neuronales Netzwerk (als Bewegungsverlaufs-Modell) eingesetzt. Bevorzugt erfolgt das Training mittels überwachtem Lernen. Es wäre jedoch auch möglich, das Bewegungsverlaufs-Modell bzw. das Künstliche Neuronale Netz mittels unbeaufsichtigtem Lernen, bestärkendem Lernen oder stochastischem Lernen zu trainieren.

Zusätzlich oder alternativ ist es möglich, dass die die Trainingsdaten wenigstens eine für einen aktuellen Zustand einer Stoßdämpfereinrichtung charakteristische Größe umfassen.

Bevorzugt werden dem Bewegungsverlaufs -Modell bzw. dem (künstlichen) neuronalen Netzwerk die (zu verarbeitenden) Daten, insbesondere ein erfasster aktueller Zustand der Stoßdämpfereinrichtung, bevorzugt wenigstens ein erfasster aktueller Zustand einer Stoßdämpfereinrichtung und besonders bevorzugt wenigstens je Stoßdämpfereinrichtung ein erfasster aktueller Zustand, (oder hierfür charakteristische oder hiervon abgeleitete Daten), welche bevorzugt von der Sensoreinrichtung (oder einer anderen Sensoreinrichtung) ermittelt wurden, als Eingangsgrößen zugeführt. Bevorzugt bildet das Bewegungsverlaufs-Modell bzw. das künstliche neuronale Netzwerk die Eingangsgrößen in Abhängigkeit einer parametrierbaren Verarbeitungskette auf Ausgangsgrößen ab.

Für einen aktuellen Zustand charakteristische Größen können (im Rahmen einer Regelung) erforderliche Stellgrößen und/oder Steuerungsgrößen sein.

Bevorzugt ist als Ausgangsgröße wenigstens eine Zustandsgröße und/oder eine für eine Wartung und/oder einen Fehlerzustand der Stoßdämpfereinrichtung(en) charakteristische Größe gewählt.

Bevorzugt sind als Ausgangsgröße für jede Stoßdämpfereinrichtung des Kraftfahrzeugs jeweils wenigstens eine Zustandsgröße und/oder eine für eine Wartung und/oder einen Fehlerzustand und/oder Ausfallwahrscheinlichkeit der Stoßdämpfereinrichtung charakteristische Größe gewählt.

Bevorzugt wird/wurde das Bewegungsverlaufs -Modells maschinellen Lernens unter Verwendung vorgegebener Trainingsdaten trainiert, wobei durch das Training die parametrierbare Verarbeitungskette parametriert wird.

Bei einem bevorzugten Verfahren werden in dem Trainingsprozess des Bewegungsverlaufs - Modells Trainingsdaten verwendet, welche historisch erfasste Daten, insbesondere für Grenzwerte und/oder Zustände, Grenzwerte für ein wiederholtes Erreichen von Grenzwerten und/oder Zuständen, Grenzwerte für eine zeitliche Veränderung und/oder eine Veränderungsgeschwindigkeit von den aktuellen Zustand charakterisierenden Werten, statistische Grenzwerte und/oder Zustände von, von der Dämpfereinrichtung (und/oder Sensoreinrichtung) verschiedenen (aber bevorzugt baugleichen) Kraftfahrzeugen umfassen. Dies bietet den Vorteil, dass in kurzer Zeit eine hohe Zahl an Trainingsdaten erzeugt und etwaige Fehlfunktionen der Sensoreinrichtung entdeckt werden können.

Bevorzugt umfassen die Trainingsdaten als Klassifizierungsmerkmal die Information, ob der Zustand einem (störungsfreien) Regelbetrieb entspricht und/oder ob eine Fehlfunktion vorliegt und/oder ob ein (fortschreitender) Alterungszustand der Stoßdämpfereinrichtung und/oder der Sensoreinrichtung vorliegt.

Bevorzugt ist das Bewegungsverlaufs-Modell dazu geeignet und bestimmt, (in den Trainingsdaten) Abweichungen und/oder Anomalien und/oder Muster zu erkennen, welche einen Fehlerzustand und/oder Fehlfunktionen und/oder eine (fortgeschrittene) Alterung von Elementen der Stoßdämpfereinrichtung und/oder der Sensoreinrichtung und/oder einen Wartungsbedarf der Stoßdämpfereinrichtung und/oder der Sensoreinrichtung zu erkennen.

Bevorzugt gibt das Bewegungsverlaufs-Modell in Abhängigkeit der Eingangsgrößen einen hierfür charakteristischen Wahrscheinlichkeitswert (als Ausgangsgröße) aus.

Bei einem weiteren bevorzugten Verfahren wird bei der Ermittlung des genannten Wertes beziehen Qualitätswert wenigstens ein Parameter berücksichtigt, der für das untersuchte Kraftfahrzeug charakteristisch ist. Besonders bevorzugt ist dieser Parameter aus einer Gruppe von Parametern ausgewählt, welche ein Gewicht des Fahrzeugs, einen Typ des Fahrzeugs, einen Radstand der Räder des Fahrzeugs, ein Alter des Fahrzeugs, ein Alter des Stoßdämpfers, einen Hersteller des Stoßdämpfers, Einstellungen des Stoßdämpfers, oder dergleichen enthält.

Bei einer bevorzugten Ausführungsform wird die Erhebung von dem Kraftfahrzeug mit mehreren und insbesondere mit allen Reifen des Kraftfahrzeugs überfahren und während dieses überfahren wird bevorzugt ein Dämpfungsverhalten derjenigen Stoßdämpfer ermittelt, die diesen jeweiligen Reifen oder Rädern zugeordnet sind.

Bei einem herkömmlichen Kraftfahrzeug wird also mit allen vier Reifen, d. h. den beiden Vorderreifen und den beiden Hinterreifen über die Erhebung gefahren und es werden jeweils mittels der diesen Reifen zugeordneten Sensoreinrichtungen die Bewegungsgrößen wie oben beschrieben erfasst.

Bevorzugt werden die Dämpfungsverhalten aller den einzelnen Rädern zugeordneten Stoßdämpfer ermittelt.

Bevorzugt werden individuelle Werte für jeden Stoßdämpfer ausgegeben. Besonders bevorzugt sind daher vier Sensoreinrichtungen vorgesehen. Dabei wäre es möglich, dass die von den Sensoren aufgenommenen bzw. ausgegebenen Werte ausgewertet werden und als Ergebnis die Information geliefert wird, ob der jeweilige Stoßdämpfer noch intakt oder verwendbar ist. Dies wird untenstehend genauer erläutert.

Die vorliegende Erfindung ist weiterhin auf eine Vorrichtung zum Untersuchen des Dämpfungsverhaltens von Stoßdämpfern von Kraftfahrzeugen und insbesondere von Straßenkraftfahrzeugen gerichtet. Diese Vorrichtung weist eine Fahrbahn auf und wenigstens eine aus der Fahrbahnebene herausragende Erhebung wobei diese Erhebung von dem Kraftfahrzeug mit mindestens einem Reifen überfahrbar ist und während dieses Überfahrens ein Dämpfungsverhalten wenigstens desjenigen Stoßdämpfers ermittelbar ist, der diesem Reifen zugeordnet ist und/oder mit dem dieser Reifen (über eine Stoßdämpfereinrichtung) in mechanischer Wirkverbindung steht,

Erfindungsgemäß ist zu Ermittlung des Dämpfungsverhaltens wenigstens eine Sensoreinrichtung vorgesehen, welche eine für eine Bewegung des Reifens gegenüber der Sensoreinrichtung charakteristische Größe erfasst.

Bevorzugt weist die Vorrichtung wenigstens zwei, bevorzugt wenigstens drei und bevorzugt wenigstens vier derartige Sensoreinrichtungen auf. Bevorzugt ist jedem Reifen und/oder Rad des Kraftfahrzeugs eine derartige Sensoreinrichtung zugeordnet oder zuordenbar.

Bevorzugt weist die Vorrichtung eine Auswerteeinrichtung auf, welche dazu geeignet und bestimmt ist, unter Verwendung der charakteristischen Größe wenigstens einen Wert zu ermitteln, der für einen Qualitätszustand des Stoßdämpfers charakteristisch ist. Bevorzugt weist wenigstens eine Sensoreinrichtung eine Sendeeinrichtung auf, welche dazu geeignet und bestimmt ist, die charakteristische Größe oder ein aus dieser charakteristischen Größe abgeleitetes Signal an die Auswerteeinrichtung zu senden.

Bei einer weiteren vorteilhaften Ausführungsform weist die Vorrichtung eine Erhebungseinrichtung auf, welche die wenigstens eine Erhebung und bevorzugt zwei Erhebungen ausbildet, wobei diese Erhebungseinrichtung eine erste Erhebungseinheit aufweist, welche von einem ersten Rad des Kraftfahrzeugs überfahrbar ist sowie eine zweite Erhebungseinheit, welche von der ersten Erhebungseinheit beabstandet ist und welche von einem zweiten Rad des Kraftfahrzeugs überfahrbar ist, wobei die erste Erhebungseinheit und die zweite Erhebungseinheit bevorzugt mittels eines Verbindungsträgers miteinander insbesondere lösbar verbunden sind.

Bevorzugt ist ein Abstand zwischen der ersten Erhebungseinheit und der zweiten Erhebungseinheit veränderbar, um eine Anpassung auf unterschiedliche Kraftfahrzeuge zu ermöglichen.

Bevorzugt sind die erste Erhebungseinheit und die zweite Erhebungseinheit aus einem Material ausgebildet, welches hohen Gewichtskräften standhält, bevorzugt Gewichtskräften von mehr als 600N, bevorzugt von mehr als 800N und besonders bevorzugt von mehr als 1000N und bevorzugt von mehr als 1200N und besonders bevorzugt von mehr als 1500N und besonders bevorzugt von mehr als 2000N.

Bevorzugt sind die Erhebungseinheiten aus einem Kunststoff gefertigt und/oder weisen ein aus einem Kunststoff gefertigtes Gehäuse auf.

Bei einer bevorzugten Ausführungsform ist die Erhebungseinrichtung als Einheit ausgebildet. Bevorzugt ist jedoch die Erhebungseinrichtung demontierbar. Bevorzugt sind die Erhebungseinrichtungen von dem Verbindungsträger lösbar bzw. an diesem Verbindungsträger montierbar und von diesem demontierbar.

Bevorzugt kann die Erhebungseinrichtung auf einer Straße und/oder Fahrbahn abgelegt werden und von der Straße und/oder Fahrbahn entfernt werden. Bevorzugt weist die Erhebungseinrichtung ein Gewicht auf, welches geringer ist als 100kg, bevorzugt geringer als 80kg, bevorzugt geringer als 60kg und besonders bevorzugt geringer als 50kg und besonders bevorzugt geringer als 40kg und besonders bevorzugt geringer als 30kg.

Bei einer vorteilhaften Ausführungsform weist die Erhebungseinrichtung eine Erfassungseinrichtung zur Erfassung einer Geschwindigkeit des Kraftfahrzeugs auf.

Bevorzugt weist hierzu die Erhebungseinrichtung eine oder mehrere Lichtschranken auf, welche die Geschwindigkeit eines die Erhebungseinheit überfahrenden Reifens bzw. Rades ermitteln. Dabei wäre es möglich, dass die Geschwindigkeit des Kraftfahrzeugs einmal während des Überfahrens erfasst wird. Es wäre jedoch auch möglich, dass ein Geschwindigkeitsverlauf des Kraftfahrzeugs während des gesamten Überfahrvorgangs erfasst wird.

Es wären jedoch auch andere Vorgehensweisen zur Geschwindigkeitserfassung möglich, wie etwa eine Messung der Entfernung zu dem Kraftfahrzeug oder eine Änderung dieser Entfernung.

Bevorzugt wird die ermittelte Geschwindigkeit den Messergebnissen der einzelnen Sensoreinrichtungen zugeordnet.

Bei einer weiteren vorteilhaften Ausführungsform weist die Erhebungseinrichtung eine Identifikationseinrichtung zum Identifizieren des Kraftfahrzeugs auf.

Bevorzugt weist die Identifizierungseinrichtung eine Bildaufnahmeeinrichtung wie eine Kamera auf, welche wenigstens ein für das KFZ charakteristisches Merkmal erfasst, insbesondere ein Nummernschild. Es wäre jedoch auch möglich, andere für das Kraftfahrzeug charakteristische Merkmale zu erfassen. So könnte etwa ein Bild des Kraftfahrzeugs aufgenommen werden und dieses Bild beispielsweise mit in einer Datenbank abgelegten Bildern verglichen werden.

Besonders bevorzugt wird dem identifizierten Kraftfahrzeug wenigstens ein gemessener Geschwindigkeitswert zugeordnet oder ist entsprechend zuordenbar.

Bevorzugt werden auch die von den Sensoreinrichtungen ausgegebenen Werte dem identifizierten Kraftfahrzeug zugeordnet.

Bei einer bevorzugten Ausführungsform sind die Erfassungseinrichtung(en) und/oder Identifizierungseinrichtung in dem Verbindungsträger angeordnet.

Es wäre jedoch auch möglich, dass die Erfassungseinrichtungen zum Erfassen der Geschwindigkeit des Kraftfahrzeugs jeweils in den Erhebungseinheiten oder nur in einer Erhebungseinheit angeordnet sind.

Bei einer weiteren vorteilhaften Ausführungsform ist der Verbindungsträger mit den Erhebungseinheiten mechanisch und/oder elektrisch koppelbar und von diesen elektrisch und/oder mechanisch entkoppelbar.

Bei einer weiteren bevorzugten Ausführungsform weist die Erhebungseinrichtung eine Energiespeichereinrichtung wie eine Batterie auf. Diese ist bevorzugt in dem Verbindungsträger angeordnet. Auf diese Weise kann die Erhebungseinrichtung als autarke Einheit ausgebildet sein.

Bei einer bevorzugten Ausführungsform weist die Erhebungseinrichtung eine Empfangseinrichtung zum Empfang der Signale der Sensoreinrichtungen auf. Weiterhin weist bevorzugt die Erhebungseinrichtung eine Sendeeinrichtung auf, welche beispielsweise für ein identifiziertes Kraftfahrzeug und/oder eine Geschwindigkeit charakteristische Signale ausgibt.

Bei einer weiteren bevorzugten Ausführungsform ist die Erhebungseinrichtung wenigstens teilweise aus einem Kunststoff ausgebildet.

Bei einer weiteren vorteilhaften Ausführungsform weist die Erhebungseinrichtung eine Auffahrkante auf, auf welcher der Reifen auffährt. In einem an der Oberfläche der Fahrbahn angeordneten Zustand erstreckt sich diese Auffahrkante bevorzugt im Wesentlichen senkrecht zu der Fahrbahn.

Bevorzugt weist diese Auffahrkante eine Höhe auf die größer ist als 0,5cm, bevorzugt größer als 1,0 cm, bevorzugt größer als 1,5cm, bevorzugt größer als 2,0cm und besonders bevorzugt größer als 2,5cm. Bevorzugt weist diese Auffahrkante eine Höhe auf die kleiner ist als 20,0cm, bevorzugt kleiner als 15,0 cm, bevorzugt kleiner als 12,0cm, bevorzugt kleiner als 10,0cm und besonders bevorzugt kleiner als 8,0cm.

Besonders bevorzugt schließt sich an diese Auffahrkante ein gekrümmter oder schräg verlaufender Abschnitt der Erhebungseinrichtung oder Erhebungseinheit an.

Die vorliegende Erfindung ist weiterhin auf eine Erhebungseinrichtung gerichtet, welche auf einer Fahrbahn platzierbar ist und welche die wenigstens eine von einem Kraftfahrzeugrad überfahrbare Erhebung ausbildet, wobei diese Erhebungseinrichtung eine erste Erhebungseinheit aufweist, welche von einem ersten Rad des Kraftfahrzeugs überfahrbar ist sowie eine zweite Erhebungseinheit, welche von der ersten Erhebungseinheit beabstandet ist und welche von einem zweiten Rad des Kraftfahrzeugs überfahrbar sind, wobei die erste Erhebungseinheit und die zweite Erhebungseinheit mittels eines Verbindungsträgers miteinander insbesondere lösbar verbunden sind und wobei die Erhebungseinrichtung weiterhin eine Geschwindigkeitserfassungseinrichtung aufweist, welche dazu geeignet und bestimmt ist, eine Geschwindigkeit eines die Erhebungseinrichtung und/oder wenigstens eine Erhebungseinheit des überfahrenden Kraftfahrzeugs zu bestimmen und wobei bevorzugt die Erhebungseinrichtung weiterhin eine Identifizierungseinrichtung aufweist, welche dazu geeignet und bestimmt ist, ein Kraftfahrzeug und insbesondere ein die Erhebungseinrichtung überfahrendes Kraftfahrzeug zu identifizieren.

Die vorliegende Erfindung ist weiterhin auf eine Sensoreinrichtung zum Erfassen von Bewegungen, insbesondere zur Bestimmung eines Dämpfungsverhaltens von Stoßdämpfern von Kraftfahrzeugen und insbesondere von Straßenkraftfahrzeugen gerichtet.

Dabei weist diese Sensoreinrichtung ein Gehäuse auf und eine innerhalb dieses Gehäuses angeordnete Sensoreinheit. Weiterhin weist die Sensoreinrichtung eine Befestigungseinrichtung auf, um die Sensoreinrichtung an einem Abschnitt eines zu untersuchenden Kraftfahrzeuges und insbesondere an einem Abschnitt der Karosserie dieses Kraftfahrzeugs (vorübergehend und wieder entfernbar) anzubringen.

Dabei ist die Sensoreinheit dazu geeignet und bestimmt, wenigstens eine Bewegungsgröße zu bestimmen, welche für eine Bewegung der Sensoreinrichtung und insbesondere eine Bewegung der Sensoreinrichtung in einer vertikalen Richtung charakteristisch ist.

Erfindungsgemäß ist die Sensoreinheit derart ausgebildet, dass sie sich selbsttätig derart ausrichtet (oder ihre Messwerte derart ausgibt), dass die Bewegungsgröße in einer vorgegebenen vertikalen geradlinigen Bewegungsrichtung (unabhängig von einer geometrischen Ausrichtung der Sensoreinrichtung bestimmt wird.

Dabei ist es möglich, dass sich die Sensoreinheit durch mechanische Mittel ausrichtet, sodass die Bewegungsgröße in der vertikalen Richtung bestimmt wird. Es ist jedoch auch möglich, dass diese Ausrichtung elektronisch und ohne mechanische Veränderung erfolgt. So kann beispielsweise die Sensoreinheit feststellen, in welcher Richtung sich die vertikale Ausrichtung oder der Erdmittelpunkt befindet und/oder in welcher Richtung die Erdbeschleunigung wirkt.

Unter Verwendung dieses Wertes können die von der Sensoreinrichtung bestehenden Werte entsprechend kalibriert werden, beispielsweise mit einem Faktor versehen werden, der die abweichenden Richtungen der tatsächlichen Ausrichtung von der vertikalen Richtung berücksichtigt.

Beispielweise kann die Sensoreinheit einen Neigungssensor aufweisen, der eine Neigung der Sensoreinheit gegenüber einer vorgegebenen Ausrichtung wie etwa einer vertikalen Richtung bestimmt. Neigungssensoren messen den Winkel eines Objekts im Bezug zur Schwerkraft. Diese Sensoren bestimmen "Pitch-" und/oder "Roll-" Winkel und geben bevorzugt diese Werte über die entsprechende elektrische Schnittstelle aus. Auf Basis dieser so ermittelten Neigung kann eine tatsächliche gemessene Bewegung in eine entsprechende Bewegung in Richtung der Schwerkraft umgerechnet werden.

Bevorzugt handelt es sich bei dem wenigstens einen Befestigungsmittel um ein magnetisches Befestigungsmittel oder um einen oder mehrere Saugnäpfe. Bevorzugt ist das Befestigungsmittel derart gestaltet, dass die Sensoreinrichtung an dem Kraftfahrzeug befestigbar und auch wieder von dem Kraftfahrzeug lösbar ist, ohne dass hierdurch Beschädigungen etwa einer Lackoberfläche des Kraftfahrzeugs auftreten. So könnte beispielsweis an einem magnetischen Element der Befestigungseinrichtung ein Schonüberzug angeordnet sein.

Bevorzugt weist die Sensoreinheit eine Richtungsbestimmungseinrichtung auf, welche dazu geeignet und bestimmt ist eine vertikale Richtung zu bestimmen.

Der Vorteil der Ausbildung dieser Ausrichteinheit besteht darin, dass der Nutzer teilweise keine genau vertikal ausgerichteten Oberflächen zur Anbringung der Sensoreinrichtung zur Verfügung hat und dass der Nutzer daher die Sensoreinrichtung nicht exakt in der richtigen Position bzw. Ausrichtung montieren kann.

Die Ausrichteinrichtung kann durch fehlerhafte Befestigung entstandene Fehler kompensieren bzw. ausgleichen. Daher ist der Anbringungsort oder die Ausrichtung der Sensoreinrichtung selbst nicht relevant bzw. nicht hochkritisch und es kann daher eine Befestigung der Sensoreinrichtung auch in einer Stellung erfolgen, die nicht einer exakt vertikalen Ausrichtung entspricht.

Bevorzugt ist das Gehäuse der Sensoreinrichtung aus einem Kunststoff hergestellt.

Besonders bevorzugt weist die Sensoreinrichtung eine Speichereinrichtung zum Speichern dieses Wertes oder eines Werteverlaufs auf.

Bei einer weiteren bevorzugten Ausführungsform weist die Sensoreinrichtung eine elektrische Energiespeichereinrichtung, insbesondere eine Batterie auf, damit die Sensoreinrichtung kabellos betreibbar ist.

Es wäre jedoch auch möglich, dass die Sensoreinrichtung durch Fernenergieversorgungsmittel mit elektrischer Energie versorgt wird, um die Messung durchzuführen.

Bei einer weiteren vorteilhaften Ausführungsform weist die Sensoreinrichtung eine Sendeeinrichtung auf, welche dazu geeignet und bestimmt ist, wenigstens ein Signal, welches für die genannte Bewegung charakteristisch ist, insbesondere drahtlos an eine Empfangseinrichtung auszugeben. Besonders bevorzugt gibt die Sendeeinrichtung mit diesem Signal auch ein Signal aus, welches für diese Sendeeinrichtung charakteristisch ist. Auf diese Weise kann die Empfangseinrichtung die einzelnen empfangenen Signale den jeweiligen Sendeeinrichtungen und damit auch den jeweils zu überprüfenden Reifen bzw. Rädern bzw. Stoßdämpfereinrichtungen zuordnen.

Bei einer bevorzugten Ausführungsform weist die Sensoreinrichtung mehrere Halteelemente wie insbesondere aber nicht ausschließlich Saugnäpfe auf. Auf diese Weise kann die Sensoreinrichtung leichter auch an leicht gekrümmten Oberflächen fixiert werden.

Bevorzugt weist die Sensoreinrichtung wenigstens zwei, bevorzugt wenigstens drei, bevorzugt wenigstens vier derartige Halteelemente auf. Diese Halteelemente sind bevorzugt gleichmäßig über eine Haltefläche hinweg angeordnet.

Bei einer weiteren bevorzugten Ausführungsform weist Sensoreinrichtung weist ein Entfernungsmittel auf, mittels dessen die Sensoreinrichtung von dem Kraftfahrzeug abnehmbar, beispielsweise abziehbar ist. Auf diese Weise kann die beispielsweise mittels einem oder mehreren Saugnäpfen haftende Sensoreinrichtung von einer Karosserie eines Kraftfahrzeugs entfernt werden. Bei diesem Entfernungsmittel kann es sich beispielsweise um eine Schlaufe handeln, welche an dem Gehäuse der Sensoreinrichtung befestigt ist.

Bei einer weiteren vorteilhaften Ausführungsform weist die Sensoreinrichtung eine Lichtquelle und insbesondere eine Laserlichtquelle auf. Diese Lichtquelle dient insbesondere der Ausrichtung der Sensoreinrichtung. Dabei kann die Sensoreinrichtung beispielsweise derart ausgerichtet werden, dass das von der Lichtquelle ausgehende Laserlicht einen Punkt der Fahrbahn beleuchtet. Die Sensoreinrichtung kann derart positioniert werden, dass dieser Lichtpunkt beispielsweise in vertikaler Richtung unterhalb einer Achse des zu untersuchenden Fahrzeugrades liegt.

Die vorliegende Erfindung ist weiterhin auf einen Sensorsatz mit wenigstens zwei, bevorzugt wenigstens drei und bevorzugt wenigstens vier bevorzugt genau vier Sensoreinrichtungen der oben beschriebenen Art gerichtet, wobei diese Sensoreinrichtungen insbesondere vorübergehend an Kraftfahrzeugen anbringbar sind. Bevorzugt unterscheiden diese Sensoreinrichtungen sich in wenigstens einer optischen Eigenschaft. Auf diese Weis kann durch einen Benutzer eine Anordnung der einzelnen Sensoreinrichtungen an den jeweils vorbestimmten Rädern oder genauer in deren Umgebung erfolgen. So könnte ein Benutzer beispielsweise die Sensoreinrichtung, welche ein rotes Gehäuse aufweist, stets in der Nähe des rechten Vorderrads anbringen.

Besonders bevorzugt weist der Sensorsatz oder die Sensoranordnung auch eine Empfangseinrichtung auf, welche dazu geeignet und bestimmt ist, von den Sensoreinrichtungen empfangene Signale zu empfangen. Daneben ist auch eine Auswerteeinrichtung vorgesehen, um die betreffenden Signale auszuwerten.

Bei einer weiteren bevorzugten Ausführungsform weist die oben beschriebene Vorrichtung auch eine Anzeigeeinrichtung auf, welche dazu geeignet und bestimmt ist, Messergebnisse an einen Nutzer auszugeben.

Bevorzugt weist diese Auswerteeinrichtung eine Vergleichseinrichtung auf, welche empfangene Werte oder empfangene Werteverläufe mit Referenzwerten oder Referenzverläufen vergleicht.

Bevorzugt kann diese Auswerteeinrichtung ein Signal ausgeben, welches einem Benutzer anzeigt, ob eine bestimmte Dämpfungseinrichtung funktionsfähig ist oder bereits beschädigt ist.

Dabei ist, bevorzugt weiterhin eine Anzeigeeinrichtung vorgesehen, welche dazu geeignet und bestimmt ist, den Benutzer für jeden einzelnen Dämpfer eine Information auszugeben, ob dieser korrekt arbeitet. Dabei kann diese Ausgabeeinrichtung diese Information beispielsweise in gut oder schlecht ausgeben oder auch beispielsweise in drei Stufen, die bedeuten, dass der Dämpfer brauchbar ist oder nicht mehr brauchbar ist oder erste Verschleißerscheinungen zeigt.

Weitere Vorteile und Ausführungsformen ergeben sich aus den beigefügten Zeichnungen:
darin zeigen:
- Fig. 1: eine Darstellung zur Erläuterung der Erfindung;
- Fig. 2: einen Satz von vier Sensoreinrichtungen;
- Fig. 3: von den Sensor Einrichtungen auf genommene Werte oder Daten;
- Fig. 4: eine Darstellung einer Informationsausgabe an den Benutzer;
- Fig. 5a,b: zwei weitere Darstellungen einer erfindungsgemäßen Sensoreinrichtung; und
- Fig. 6a,b: zwei weitere Darstellungen einer erfindungsgemäßen Erhebungseinrichtung.

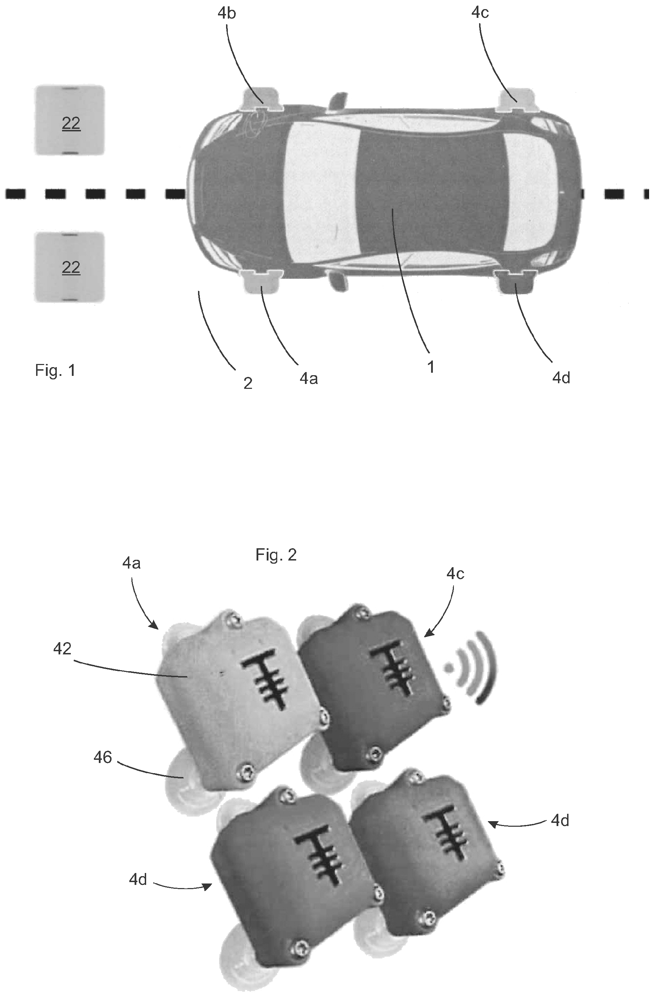

Fig. 1 zeigt eine schematische Darstellung zur Veranschaulichung der Erfindung. Dabei ist ein Kraftfahrzeug 1 gezeigt, welches vier Räder aufweist, die jeweils mittels Stoßdämpfern an dem Fahrgestell des Kraftfahrzeugs 1 angeordnet sind. Dieses Kraftfahrzeug 1 wird hier mit einer vorgegebenen Geschwindigkeit nach links bewegt, um so über in der Fahrbahn 2 angeordnete Erhebungen 22 zu fahren. Durch das Überfahren dieser Erhebungen werden die Räder gegenüber der Karosserie oder gegenüber dem Fahrgestell in der vertikalen und hier zu Figur 1 senkrecht stehenden Richtung bewegt.

An dem Fahrzeug werden zur Messung vier Sensoreinrichtungen 4a, 4b, 4c und 4d angeordnet. Diese Sensoreinrichtungen erfassen Relativbewegungen zwischen den Sensoreinrichtungen und dem Fahrgestell und/oder der Karosserie und/oder der Fahrbahn 2 und insbesondere gegenüber der Fahrbahn in der vertikalen Richtung. Diese Relativbewegungen lassen einen Rückschluss auf die einzelnen Stoßdämpfer zu.

Fig. 2 zeigt einen Satz von vier Sensoreinrichtungen 4a, 4b, 4c und 4d. Diese weisen jeweils Befestigungseinrichtungen 46, hier in der Form von Saugnäpfen auf, um die Sensoreinrichtungen an bestimmten Bereichen der Karosserie des Kraftfahrzeugs anzuordnen. Bevorzugt werden die Sensoreinrichtungen im Wesentlichen vertikal oberhalb der jeweiligen Räder bzw. der Radachsen angeordnet. Es wird jedoch darauf hingewiesen, dass geringe Verschiebungen bezüglich der Radachse nur mit allenfalls sehr geringen Fehlmessungen verbunden sind.

Die einzelnen Sensoreinrichtungen weisen jeweils Gehäuse 42 auf, innerhalb derer die Messelektronik bzw. die jeweilige Sensoreinheit angeordnet ist. Ein Symbol 45 auf dem Gehäuse zeigt dem Benutzer die ungefähre Ausrichtung an, in welcher er die Sensoreinrichtung platzieren soll. Die einzelnen Sensoreinrichtungen können ein Signal bzw. ein Funksignal ausgeben, um ihre Werte an eine Auswerteeinrichtung zu übermitteln.

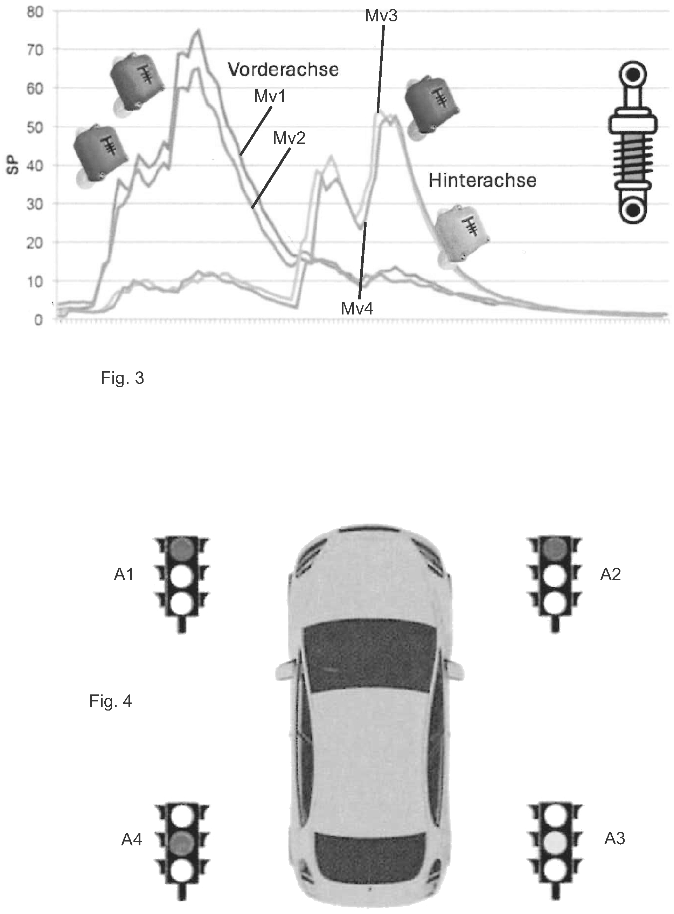

Fig. 3 zeigt ein aufgenommenes Signal bzw. aufgenommene Werteverläufe Mv1, Mv2, Mv3 und Mv4. Man erkennt dabei, dass zwei Sensoreinrichtungen diese entsprechenden Werte für die beiden Räder der Vorderachse aufnehmen und zwei weitere Sensoren, die Werte für die hinteren Räder. Man erkennt weiterhin, dass auf der x-Achse oder Ordinate die Bewegungsrichtung des Fahrzeugs aufgetragen ist und auf der Y-Achse die Relativbewegung der Sensoreinrichtung gegenüber der Fahrbahn. Der Wert 0 entspricht insbesondere dem Höhenniveau der Fahrbahn.

Wenn nun die einzelnen Reifen über die Erhebung fahren bzw. rollen, bewegen sich auch die entsprechenden Sensoreinrichtungen nach oben und diese Bewegung bzw. Positionsänderung der Sensoreinrichtungen in der vertikalen Richtung wird erfasst.

Wie zu erwarten ist, folgt beim Überfahren der Erhebung eine Positionsänderung der Sensoreinrichtung zwar der Bewegung des jeweiligen Reifens bzw. Rades jedoch bewirkt die jeweilige Stoßdämpfereinrichtung, dass die Bewegung der Sensoreinrichtung geringer ist als die Bewegung des Reifens bzw. Rades.

Die Anmelderin hat herausgefunden, dass diese Relativbewegung des Fahrzeugs ein Maß für das Dämpfungsverhalten der einzelnen Stoßdämpfer ist. Hierbei ist jeweils zu berücksichtigen, dass die Bewegung der Reifen bzw. Räder über die Erhebung hinweg bekannt ist, und sich aus der Geometrie der Erhebung ergibt. Auch die Geschwindigkeit dieser Bewegung ist genau definiert und hängt insbesondere von der Geschwindigkeit des Fahrzeugs ab.

Die Bewegung der der einzelnen Positionssensoren bzw. Sensoreinrichtungen ergibt sich aus der Bewegung der Reifen, wird jedoch durch das Dämpfungsverhalten der einzelnen Stoßdämpfer beeinflusst. Aus diesem Grunde kann aus den hier abgeleiteten Kurven ein Wert ausgegeben werden, der für das Dämpfungsverhalten der jeweiligen Stoßdämpfer geeignet ist.

Die in Fig. 3 gezeigten Verläufe können beispielsweise mit einem Referenzverlauf oder mehreren Referenzverläufen verglichen werden, der für das gleiche Fahrzeug bei intakten oder neuwertigen Stoßdämpfern aufgenommen wurde. Auch wäre es möglich, entsprechende Referenzverläufe durch Simulationen zu erzeugen.

Aus einem Vergleich dieser Signale mit den Referenzverläufen kann darauf geschlossen werden, ob der entsprechende Stoßdämpfer noch intakt ist oder bereits fehlerhaft ist.

Fig 4 zeigt eine Darstellung, in der an einen Benutzer Informationen über den Zustand der Stoßdämpfer ausgegeben werden. Bei dem in Figur vier gezeigten Beispiel hat sich ergeben, dass die Stoßdämpfer A1 und A2, welche zu dem linken Vorderrad und dem rechten Vorderrad gehören nicht mehr funktionsfähig ist, dass der Stoßdämpfer A3, der dem linken hinteren Rad zugeordnet ist fehlerhaft, aber noch brauchbar ist und dass der Stoßdämpfer am rechten Hinterrad noch voll funktionsfähig ist.

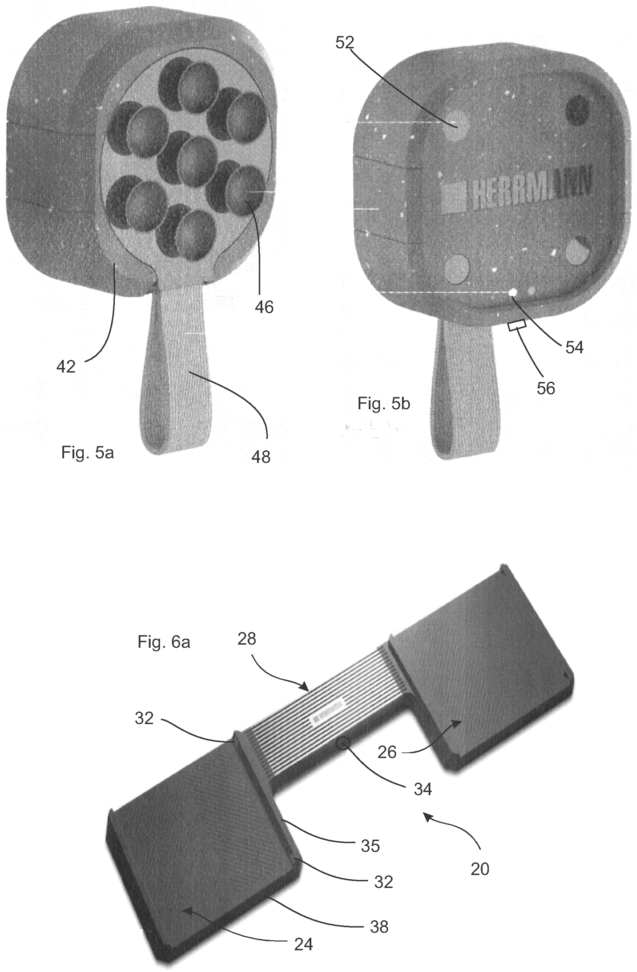

Fig. 5a,b zeigen zwei weitere Darstellungen einer erfindungsgemäßen Sensoreinrichtung. Dabei zeigt Fig. 5a die Rückseite der Sensoreinrichtung, mit welcher diese an dem KFZ befestigbar ist. Fig. 5 zeigt die Vorderseite der Sensoreinrichtung.

Man erkennt, dass in dieser Ausführungsform die Sensoreinrichtung eine Vielzahl von Halteelementen 46 aufweist, die jeweils als Saugnäpfe ausgebildet sind. Auf diese Weise wird insbesondere auch eine Fixierung an gekrümmten Oberflächen erleichtert.

Weiterhin ist an der Sensoreinrichtung ein Entfernungsmittel 48 wie eine Schlaufe vorgesehen, um die Entfernung der Sensoreinrichtung von einem Kraftfahrzeug zu erleichtern. Das Bezugszeichen 54 kennzeichnet eine Leuchtanzeige, welche beispielsweise einen Ladestatus eines Akkus anzeigen kann oder welche beispielsweise auf einen Pairing Zustand hinweisen kann.

Das Bezugszeichen 56 kennzeichnet schematisch eine Lichtquelle wie insbesondere eine Laserlichtquelle, welche dazu dient, die Ausrichtung der Sensoreinrichtung zu erleichtern. Diese Laserlichtquelle 56 leuchtet bei idealer Ausrichtung auf die Fahrbahn, so dass in einfacher Weise einem Nutzer die Ausrichtung der Sensoreinrichtung angezeigt wird.

Das Bezugszeichen 52 kennzeichnet auf eine insbesondere farbliche Markierung, die insbesondere einen Hinweis geben kann, welchem Fahrzeugrad diese Sensoreinrichtung zuzuordnen ist.

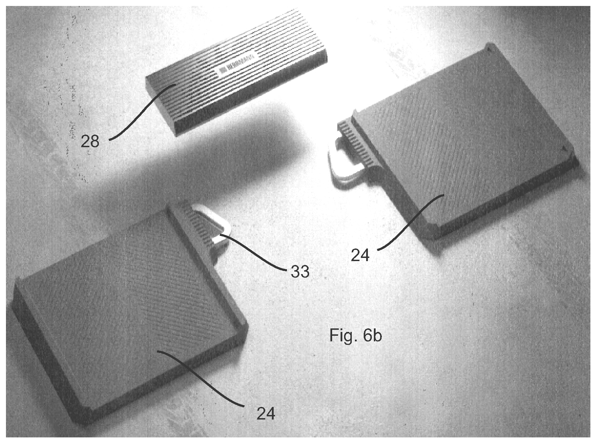

Die Fig. 6a,b zeigen eine Darstellung einer Erhebungseinrichtung 20. Diese Erhebungseinrichtung bildet die oben genannten Erhebungen aus, welche von den Kraftfahrzeugrädern überfahrbar sind. Fig. 6a zeigt dabei einen zusammengebauten Zustand der Erhebungseinrichtung und Fig. 6b einen demontierten Zustand.

Die Erhebungseinrichtung 20 weist eine erste Erhebungseinheit 24 und eine zweite Erherbungseinheit 26 auf, welche voneinander beabstandet sind und welche mittels eines Verbindungsträgers 28 miteinander verbunden sind.

Das Bezugszeichen 32 kennzeichnet eine Erfassungseinrichtung, welche dazu dient, eine Geschwindigkeit des die Erhebungseinrichtung überfahrenden Kraftfahrzeugs zu bestimmten. Hier kann es sich beispielsweise um eine oder mehrere Lichtschranken handeln, welche bevorzugt das Auffahren und Überrollen eines Kraftfahrzeugrades erfassen. Aus der Drehung des Rades und/oder der Position des Rades kann auf die Geschwindigkeit des Kraftfahrzeugs geschlossen werden. Bevorzugt ist eine erste Lichtschrankeneinheit 32 an einem ersten Ende der Erhebung angeordnet und eine zweite Lichtschrankeneinheit 32 in der Fahrtrichtung an einem Ende der Erhebung.

Das Bezugszeichen 34 kennzeichnet eine Identifizierungseinrichtung, welche dazu geeignet und bestimmt ist, das Kraftfahrzeug zu identifizieren. Diese Identifizierungseinrichtung 34 kann beispielsweise eine Kamera aufweisen, welche ein Nummernschild des Kraftfahrzeugs erfasst, um so das Kraftfahrzeug zu identifizieren.

Das Bezugszeichen 38 kennzeichnet eine Auffahrkante, über welche hinweg das Kraftfahrzeug auf die jeweilige Erhebung auffährt. Das Bezugszeichen 35 kennzeichnet eine Seitenkante, welche ein seitliches Herabfahren eines Rades bzw. Reifens verhindert.

Auf der Oberfläche der beiden Erhebungseinheiten ist bevorzugt jeweils eine Musterung angeordnet, welche die korrekte Fahrrichtung anzeigt.

Fig. 6b zeigt einen demontierten Zustand der Erhebungseinrichtung. Man erkennt hier jeweils Verbindungselemente 33, die an den beiden Erhebungseinheiten 24,26 angeordnet sind und die der mechanischen Verbindung mit dem Verbindungsträger 28 dienen. Daneben sind diese beiden Verbindungselemente 33 auch derart gestaltet, dass sie als Tragegriffe zum Tragen der Erhebungseinrichtungen 24 und 26 dienen.

Neben der mechanischen Verbindung zwischen den Erhebungseinheiten 24 und 26 und dem Verbindungsträger 28 wird bevorzugt auch eine elektrische Verbindung zwischen diesen Einheiten hergestellt. Auf diese Weise können beispielsweise Signale von den Lichtschrankten 32 einer Prozessoreinrichtung, welche bevorzugt in dem Verbindungsträger angeordnet ist, zugeführt werden.

Es wird darauf hingewiesen, dass sämtliche Merkmale, welche unter Bezugnahme auf das Verfahren beschrieben wurden, in entsprechender Weise auch für die Vorrichtung offenbart sind, was insbesondere bedeutet, dass die entsprechende Vorrichtung Einrichtungen aufweist, welche zur Durchführung der jeweiligen Verfahren geeignet und bestimmt sind. Weiterhin sind auch Merkmale, welche unter Bezugnahme auf die Vorrichtung beschrieben wurden entsprechend für das oder die Verfahren anwendbar. Dies bedeutet, dass die Verfahren unter Verwendung der entsprechenden Vorrichtungsmerkmale ausgeführt werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verfahren zum Untersuchen des Dämpfungsverhaltens von Stoßdämpfern von Kraftfahrzeugen und insbesondere von Straßenkraftfahrzeugen (1), wobei eine Fahrbahn (2) mit einer aus der Fahrbahnebene herausragenden Erhebung (22) zur Verfügung gestellt wird, und diese Erhebung von dem Kraftfahrzeug mit mindestens einem Reifen (6a, 6b, 6c, 6d) überfahren wird und während dieses Überfahrens ein Dämpfungsverhalten wenigstens desjenigen Stoßdämpfers ermittelt wird, der diesem Reifen (6a, 6b, 6c, 6d) zugeordnet ist,
**dadurch gekennzeichnet, dass**
zur Ermittlung des Dämpfungsverhaltens eine Sensoreinrichtung (4a, 4b, 4c, 4d) verwendet wird, welche eine für eine Bewegung des Reifens gegenüber der Sensoreinrichtung (4a, 4b, 4c, 4d) charakteristische Größe ist.

2. Verfahren nach Anspruch 1,
**dadurch gekennzeichnet, dass**
es sich bei der Bewegung des Reifens gegenüber der Sensoreinrichtung um eine Bewegung in einer vertikalen Richtung und/oder in einer senkrecht zu der Fahrbahn stehenden Richtung handelt.

3. Verfahren nach wenigstens einem der vorangegangenen Ansprüche,
**dadurch gekennzeichnet, dass**
die Sensoreinrichtung (4a, 4b, 4c, 4d) an einer Karosserie des Fahrzeugs und/oder im Wesentlichen oberhalb des Reifens angeordnet und insbesondere befestigt wird.

4. Verfahren nach wenigstens einem der vorangegangenen Ansprüche,
**dadurch gekennzeichnet, dass**
die Sensoreinrichtung (4a, 4b, 4c, 4d) eine Sensoreinheit aufweist, welche sich unabhängig von einer Montageposition der Sensoreinrichtung derart ausrichtet, dass eine Messung der Bewegung in der vertikalen Richtung durchgeführt wird.

5. Verfahren nach wenigstens einem der vorangegangenen Ansprüche,
**dadurch gekennzeichnet, dass**
die für die Bewegung des Reifens gegenüber der Sensoreinrichtung (4a, 4b, 4c, 4d) charakteristische Größe aus einer Gruppe von Größer ausgewählt ist, welche eine geometrische Position der Sensoreinrichtung gegenüber dem Reifen, insbesondere eine geometrische Position der Sensoreinrichtung gegenüber dem Reifen in einer vertikalen Richtung, eine Geschwindigkeit einer Bewegung der Sensoreinrichtung (4a, 4b, 4c, 4d) gegenüber dem Reifen insbesondere eine Geschwindigkeit der Bewegung der Sensoreinrichtung gegenüber dem Reifen in einer vertikalen Richtung, eine Beschleunigung einer Bewegung der Sensoreinrichtung (4a, 4b, 4c, 4d) gegenüber dem Reifen insbesondere eine Beschleunigung der Bewegung der Sensoreinrichtung gegenüber dem Reifen in einer vertikalen Richtung und einen Ruck einer Bewegung der Sensoreinrichtung (4a, 4b, 4c, 4d) gegenüber dem Reifen insbesondere einen Ruck der Bewegung der Sensoreinrichtung gegenüber dem Reifen in einer vertikalen Richtung enthält.

6. Verfahren nach wenigstens einem der vorangegangenen Ansprüche,
**dadurch gekennzeichnet, dass**
die charakteristische Größe ein Verlauf ist, der über eine vorgegebene Zeit und/oder über eine vorgegebene Bewegungsstrecke aufgenommen wird und/oder die charakteristische Größe mit einem Referenzwert verglichen wird und insbesondere ein charakteristischer Verlauf der Größe mit einem Referenzverlauf verglichen wird und bevorzugt aus diesem Vergleich wenigstens ein Wert ermittelt wird, der für einen Qualitätszustand des Stoßdämpfer charakteristisch ist.

7. Verfahren nach dem vorangegangenen Anspruch,
**dadurch gekennzeichnet, dass**
bei der Ermittlung dieses Werts wenigstens ein Parameter berücksichtigt wird, der für das untersuchte Kraftfahrzeug charakteristisch ist.

8. Verfahren nach wenigstens einem der vorangegangenen Ansprüche,
**dadurch gekennzeichnet, dass**
diese Erhebung von dem Kraftfahrzeug mit mehreren und insbesondere mit Reifen (6a, 6b, 6c, 6d) des Kraftfahrzeugs überfahren wird und während dieses Überfahrens ein Dämpfungsverhalten derjenigen Stoßdämpfer ermittelt wird, die diesen jeweiligen Reifen (6a, 6b, 6c, 6d) zugeordnet sind.

9. Vorrichtung zum Untersuchen des Dämpfungsverhaltens von Stoßdämpfern von Kraftfahrzeugen und insbesondere von Straßenkraftfahrzeugen (1) mit wenigstens einer Fahrbahn (2) mit einer aus der Fahrbahnebene herausragenden Erhebung (22), wobei diese Erhebung von dem Kraftfahrzeug mit mindestens einem Reifen (6a, 6b, 6c, 6d) überfahrbar ist und während dieses Überfahrens ein Dämpfungsverhalten wenigstens desjenigen Stoßdämpfers ermittelbar ist, der diesem Reifen (6a, 6b, 6c, 6d) zugeordnet ist und/oder mit dem dieser Reifen in mechanischer Wirkverbindung steht,
**dadurch gekennzeichnet, dass**
zur Ermittlung des Dämpfungsverhaltens eine Sensoreinrichtung (4a, 4b, 4c, 4d) vorgesehen ist, welche eine für eine Bewegung des Reifens gegenüber der Sensoreinrichtung (4a, 4b, 4c, 4d) charakteristische Größe erfasst.

10. Vorrichtung nach dem vorangegangenen Anspruch,
**dadurch gekennzeichnet, dass**
die Vorrichtung eine Auswerteeinrichtung aufweist, welche dazu geeignet und bestimmt ist, unter Verwendung der charakteristischen Größe wenigstens einen Wert zu ermitteln, der für einen Qualitätszustand des Stoßdämpfers charakteristisch ist.

11. Vorrichtung nach wenigstens einem der vorangegangenen Ansprüche,
**dadurch gekennzeichnet, dass**
die Vorrichtung eine Erhebungseinrichtung (20) aufweist, welche die wenigstens eine Erhebung (22) ausbildet, wobei diese Erhebungseinrichtung (20) eine erste Erhebungseinheit (24) aufweist, welche von einem ersten Rad des Kraftfahrzeugs überfahrbar ist sowie eine zweite Erhebungseinheit (26), welche von der ersten Erhebungseinheit (24) beabstandet ist und welche von einem zweiten Rad des Kraftfahrzeugs überfahrbar sind, wobei die erste Erhebungseinheit (24) und die zweite Erhebungseinheit (26) bevorzugt mittels eines Verbindungsträgers (25) miteinander insbesondere lösbar verbunden sind.

12. Vorrichtung nach dem vorangegangenen Anspruch,
**dadurch gekennzeichnet, dass**
die Erhebungseinrichtung (20) eine Erfassungseinrichtung (32) zur Erfassung einer Geschwindigkeit des Kraftfahrzeugs aufweist und/oder die Erhebungseinrichtung (20) eine Identifikationseinrichtung (34) zum Identifizieren des Kraftfahrzeugs (1) aufweist.

13. Sensoreinrichtung (4a, 4b, 4c, 4d) zum Erfassen von Bewegungen, insbesondere zur Bestimmung eines Dämpfungsverhaltens von Stoßdämpfern von Kraftfahrzeugen und insbesondere von Straßenkraftfahrzeugen (1), wobei diese Sensoreinrichtung (4a, 4b, 4c, 4d) ein Gehäuse (42) aufweist und eine innerhalb dieses Gehäuses angeordnete Sensoreinheit (44) und weiterhin ein Befestigungsmittel, um die Sensoreinrichtung an einem Abschnitt eines zu untersuchenden Kraftfahrzeugs und insbesondere eines Abschnitts der Karosserie dieses Kraftfahrzeugs (1) anzubringen, wobei die Sensoreinheit (44) dazu geeignet und bestimmt ist, wenigstens eine Bewegungsgröße zu bestimmen, welche für eine Bewegung der Sensoreinrichtung insbesondere eine Bewegung der Sensoreinrichtung in einer vertikalen Richtung charakteristisch ist, **dadurch gekennzeichnet, dass**
die Sensoreinheit (44) derart ausgebildet ist, dass sie sich selbsttätig derart ausrichtet, dass die Bewegungsgrößer in einer vorgegebenen geradlinigen Bewegungsrichtung bestimmt wird.

14. Sensoreinrichtung (4a, 4b, 4c, 4d) nach dem vorangegangenen Anspruch,
**dadurch gekennzeichnet, dass**
die Sensoreinrichtung eine Sendeeinrichtung (46) aufweist, welche dazu geeignet und bestimmt ist, wenigstens ein Signal, welches für die Bewegungsadresse charakteristisch ist, insbesondere drahtlos an eine Empfangseinrichtung auszugeben.

15. Sensorsatz mit wenigstens zwei, bevorzugt wenigstens drei und bevorzug wenigstens vier Sensoreinrichtungen nach wenigstens einem der vorangegangenen Ansprüche, insbesondere zur vorübergehenden Anbringung an Kraftfahrzeugen, wobei sich bevorzugt diese Sensoreinrichtungen (4a, 4b, 4c, 4d) in wenigstens einer optisch wahrnehmbaren Eigenschaft unterscheiden.
